# EUROPEAN PATENT APPLICATION

(11) **EP 1 746 771 A1**
(43) Date of publication of application: **24.01.2007**
(21) Application number: 05743177.7
(22) Date of filing: 28.04.2005
(51) Int. Cl.: H04L 12/28

(54) **A METHOD FOR REDIALING QUICKLY TO THE BROAD BAND NETWORK OF USERS**

(30) Priority: 13.05.2004 CN 200410044216
(71) Applicant: Huawei Technologies Co., Ltd., Longgang District, Shenzhen, Guangdong 518129 (CN)
(72) Inventor: XIONG, Yu, Shenzhen, Guangdong 518129 (CN); HENG, Zhi, Shenzhen, Guangdong 518129 (CN)
(74) Representative: Manitz, Gerhart
(86) International application number: PCT/CN2005/000591
(87) International publication number: WO 2005/112349

(57) **Abstract**

A method of quick-redial for the broadband network users includes these steps. When receiving the dial-request of the broadband network users, the broadband access server (BAS) firstly decides whether the user is on-line. If the user is on-line, the BAS releases the on-line resources preallocated for the user and re-handles the on-line for the user. Further, two improvements are performed. An authority checking for checking whether the user is allowed to perform the quick-redial and a user security checking are increased. By using this invention, the users are able to redial in the network within a short time when they get off line abnormally.

## Description

### Field of the Technology

The present invention relates to the technology of data communication in broadband networks, and more specifically, to a method of redialing in the network within a short time when a Point-to-Point Protocol over Ethernet (PPPoE) user gets off line abnormally.

### Background of the Invention

The technical specification of the PPPoE was specified by the Internet Engineering Task Force (IETF) in 1998. It employs the Point-to-Point Protocol (PPP) to implement a faster, more reliable and more convenient Asymmetric Digital Subscriber Line (ADSL) broadband access and combines the existing broadband access servers with the local Ethernet. The hardware requirement for a user terminal is considered. Thus the overall performance of an ADSL broadband access is enhanced. Therefore, the PPPoE specification has received wide supports and has been a preferred broadband access mode for broadband access operators at present. However, under this authentication mode, the user can not immediately redial-in (i.e. quick-redial) the network when it gets off line abnormally. When getting off line abnormally, the user needs to wait for several minutes before dialing in the broadband network again. It is inconvenience to users and is a problem that the operators desire to solve.

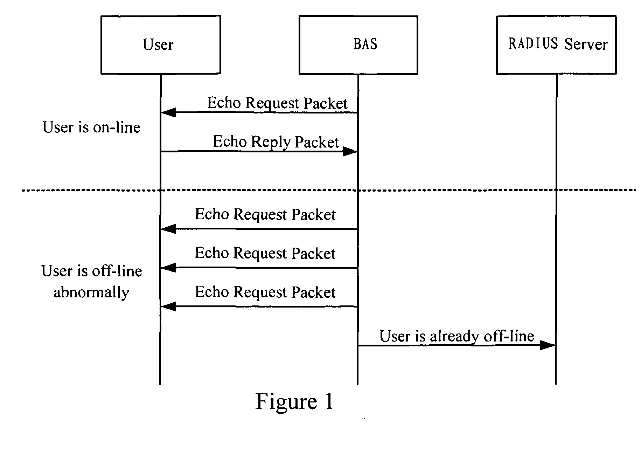

A mechanism of checking whether the remote peer is on-line has not been expressly specified in the PPP protocols, which leads to the problems described in the section of the Background of the Invention. At present, an Echo-Request/Echo-Reply packet of the Link Control Protocol (LCP) conventionally recommended by RFC2516 (PPPoE) is used to detect the link state. As shown in Figure 1, upon a PPPoE user logging in the network i.e. the LCP is valid on PPP links, in accordance with the PPP protocols, a discovery packet e.g. an Echo-Request is transmitted periodically between the PPPoE User Equipment (UE) and a BAS. The local peer (e.g. the PPPoE UE) receives the Echo-Request packet sent by the remote peer (e.g. the BAS) and returns the Echo-Reply packet. If the remote peer continuously sends the Echo-Request packets for a predetermined times and receives no corresponding Echo-Reply packets, the bottom layer communication link is regarded being invalid. The BAS reports to a Remote Access Dial-In User Service (RADIUS) server that the user has got off line. Then the link termination stage begins.

In accordance with the PPP protocols, the packet Echo-Request must be sent periodically, i.e. the Echo-Request is sent in a fixed time interval (for example, 40s). As a result, when a PPPoE user gets off line abnormally e.g. when the operating system breaks down and the power breaks down suddenly, the BAS can not immediately discover that the user has already got off line abnormally. Suppose the number of times, defined in the BAS system, of resending the Echo-Request when there is no response is 3, 3 time periods are needed to discover and confirm the off-line of the user. Suppose every time period is 40s, 120s is needed to discover and confirm the off-line. When the user redials in the network within the 3 time periods (120s), the BAS still considers that the user is on-line and rejects the dial-in request of the user, since the BAS specifies that the user off-line state can not be confirmed unless the Echo-Request has a response packet within a specified amount of time. So only when the resending of the BAS Echo-Request is completed and the user off-line state is confirmed, or when the network manager manually deletes the user connection created last time after receiving the complaint of the user, the user is enabled to dial in the network. With respect to the above problem that the user can not quickly redial in the network when it gets off line abnormally, two solutions, i.e., increasing the sending frequency of the Echo-Request and decreasing the number of times of the Echo-Request when it receives no response, are easily to be thought to accelerate the quick-redial speed when the PPPoE user gets off line abnormally.

Both the above solutions may decrease the time of discovering the user abnormal off-line state. However, the processing load of the BAS is increased. Generally, the Echo-Request/Echo-Reply packet is processed by the BAS software which operates on the BAS CPU. With the decreased time period of sending the Echo-Request, the amount of packets which need to be processed by the BAS per unit time are increased. Suppose tens of thousands of on-line users are in the BAS, the BAS can not bear such heavy burden.

Furthermore, extremely short "time period" leads to excessive Echo-Request/Echo-Reply packets in the user access links and dramatically decreases the service efficiency of the user links.

In addition, when the network is congested instantaneously, or when the server is busy, the BAS and the PPPoE UE can not exactly receive the Echo-Request/Echo-Reply packets sent by the remote peer every time. If the number of times of resending is decreased, the anti-interference robustness of the handshaking protocol is impaired and the off-line probability of the user is increased.

Therefore, it is impossible to preferably solve the above problems by simply adjusting "the time period" and "the number of times of resending". Thus a technical solution is proposed in the embodiment of the present invention to solve these problems.

### Summary of the Invention

A method of quick-redial for the broadband network users is disclosed, which enables the PPPoE user to redial in the network within a short time when the user gets off line abnormally.

The method in accordance with an embodiment of the present invention includes that a BAS may decide whether the user is on-line upon receiving a dial-request packet from the user. If the user is on-line, the BAS may release on-line resources preallocated to the user and handle on-line for the user. If the user is not on-line, the BAS may directly handle on-line for the user.

The process of the BAS determining whether the user is on-line may includes following steps. The BAS acquires a source Media Access Control (MAC) address from the dial-request packet by the BAS, and looks up source MAC addresses of on-line users stored in a database and determine whether an MAC address matching the acquired source MAC address exists. If there is an MAC address matching the acquired source MAC address, the BAS may determine that the user is on-line, otherwise determine that the user is not on-line. Preferably, the on-line resources preallocated to the user may include task, a message queue, a memory block and a timer needed for a Point-to-Point Protocol over Ethernet (PPPoE) entity and a Point-to-Point Protocol entity.

Preferably, the method further includes these steps. Upon determining whether the user is on-line, the BAS may determine whether the user is allowed to perform a quick-redial. If the user is allowed, the BAS may release on-line resources preallocated to the user and handle on-line for the user; otherwise, discard the dial-request packet. Preferably, the method further includes these steps. The BAS may set a quick-redial attribute in an interface which the user uses to access the BAS, and the process of the BAS determining whether the user is allowed to perform the quick-redial may include that the BAS inquires the interface which the user uses to access the BAS set in the database, and determines whether the user is allowed to perform the quick-redial according to the quick-redial attribute of the interface. Preferably, the method further includes setting a quick-redial authority for the user in the database, and the process of the BAS determining whether the user is allowed to perform the quick-redial may include that the BAS inquires the quick-redial authority of the user in the database, and determines whether the user is allowed to perform the quick-redial according to the quick-redial authority.

Preferably, the method further includes that, before releasing the on-line resources preallocated for the user and handling on-line for the user, the BAS may perform a user security checking for the user. If the user passes the user security checking, the BAS may release the on-line resources preallocated for the user and handle on-line for the user; otherwise, discard the dial-request packet. The BAS performing a user security checking for the user may includes that the BAS obtains Identification (ID) information from the dial-request packet, and compares the ID information with an existing on-line record of the user with the same MAC address recorded in the database. If the ID information matches the record, the user passes the checking, otherwise, the user does not pass the checking. Preferably, the ID information may include at least one of a slot number, a subslot number, a physical port number and a logical port number for receiving the user packet. Preferably, when the PPPoE is based on a Virtual Local Area Network (VLAN), the ID information may further include a Virtual Local Area Network Identifier (VLAN ID); and when the PPPoE is based on an Asynchronous Transfer Mode (ATM), the ID information may further include a Virtual Path Identifier (VPI) and a Virtual Channel Identifier (VCI). According to the embodiment of the present invention, when receiving the dial-request of the broadband network users, the BAS firstly checks whether the user is on-line. If the user is on-line, the BAS releases the on-line resources allocated previously for the user and re-performs the process for the user getting on line. Further, two improvements are performed. An authority checking for checking whether the user is allowed to perform the quick-redial and a user security checking are increased.

The PPPoE user can redial in the network within several seconds rather than in several minutes when it gets off line abnormally, thereby economizing user's time and promoting the service quality of operators.

As the quick-redial function can be implemented by increasing a few information in the BAS and modifying the processing flow without modifying large amounts of user terminals, both the implementation of the function and the upgrade of the existing system are easy.

The security of the solution is high due to the quick-redial authority checking and the user security checking. The problem that the malicious user forges the dial-request packet using the quick-redial function to make the normal on-line user getting off line can be effectively avoided.

### Brief Description of the Drawings

Figure 1 is a flowchart of using the existing protocols to detect whether the device is still on-line when the PPPoE user is on-line and when the PPPoE user gets off line abnormally, respectively; and
Figure 2 is a flowchart illustrating the method of quick-redial when a PPPoE user gets off line abnormally according to an embodiment of the invention.

### Detailed Description of the Invention

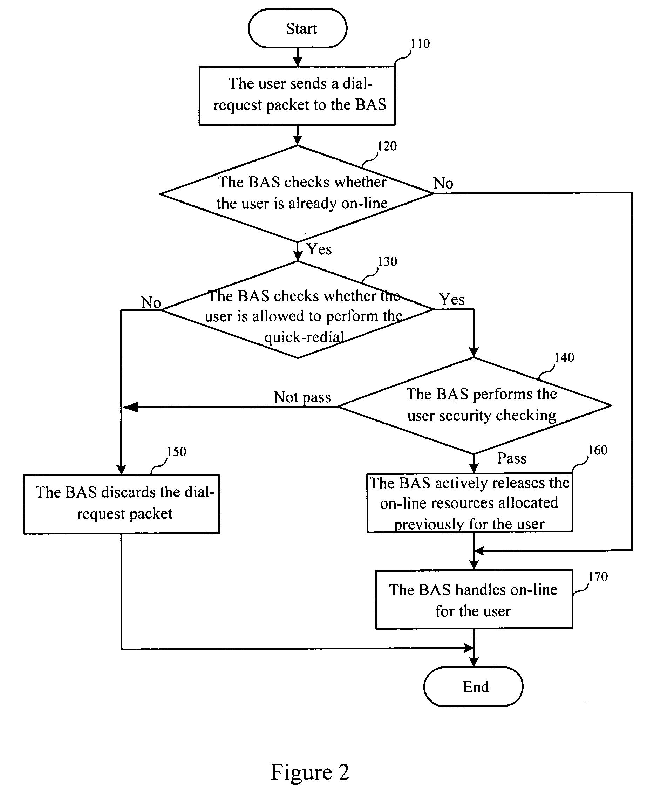

Figure 2 shows a flow of quick-redial when a PPPoE user gets off line abnormally according to an embodiment of the invention.

In Step 110, the PPPoE user sends a dial-request packet to the BAS. A preferred embodiment of this invention is based on a broadband network system which operates the PPPoE protocols. The system has a BAS in the network side of the operator while in the user side, has a user terminal that connects to an interface of the BAS by an Asymmetric Digital Subscriber Line (ADSL) link. When the user needs to dial in the network, by using the PPPoE dialing software, it sends a dial-request packet towards the BAS via the user terminal.

In Step 120, the BAS checks whether the user is on-line, if yes, performs Step 130, otherwise performs Step 170. In Step 120, the BAS device obtains a source Medium Access Control (MAC) address from the received request packet, and then looks through the on-line users information (including the user source MAC address) stored in a database and checks whether there is an address in the database matches the source MAC address of the user. If the address matching the source MAC address of the user exists in the database, it is indicated that the user is still on-line or the user has got off line abnormally; otherwise, it is indicated that the user initiates a new connection. Note that, when the matching MAC address exists, the BAS itself can not distinguish whether the user is still on-line or it has already got off line abnormally, but thinks that the user is already on-line In other words, the user got on-line and has not got off line normally or has not got off line due to overtime when the checking is performed.

In Step 130, the BAS checks whether the user is allowed to perform the quick-redial. If it is allowed, Step 140 is performed, otherwise Step 150 is performed. In a preferred embodiment of this invention, the BAS adds a quick-redial attribute in the interface that the PPPoE user uses to access the BAS. The quick-redial attribute indicates whether the user accessing via the interface is allowed to use the quick-redial function. The value of the quick-redial attribute may be Enable or Disable. If the BAS detects that the quick-redial attribute of the interface which the PPPoE user uses to access the BAS is Enable, the user is allowed to perform the quick-redial, otherwise it is not allowed to do so. In another preferred embodiment of this invention, in the user database of the network side, a quick-redial authority is configured for each user to indicate whether the user is allowed to use the quick-redial function. The value of the quick-redial authority may also be Enable or Disable. If the BAS detects that the quick-redial authority of the user is Enable, the user is allowed to perform the quick-redial, and otherwise it is not allowed to do so. The quick-redial attribute or the quick-redial authority is configured in consideration of the convenience and security of the management. If some users are possible to maliciously cause the normal on-line users off line using the quick-redial function, the possible malicious attack can be avoided by setting the quick-redial attribute of the interface which these users use to access the BAS to be Disable or by setting the quick-redial authority of these users to be Disable.

In order to enhance the process efficiency of the BAS, Step 120 may also be omitted.

In Step 140, the BAS performs a user security checking. If the user does not pass the checking, Step 150 is performed; otherwise, Step 160 is performed. Step 140 mainly prevents some users from forging the dial-request packet using the quick-redial function to cause the normal on-line users get off line abnormally. The detailed processes are described as follows: The BAS acquires ID information of the dial-request packet and compares the ID information with the existing on-line records of the user with the same MAC address recorded in the database of the BAS. If the ID information matches the records, the user passes the checking, otherwise, the user does not pass the checking. Herein, the ID information includes at least one of a slot number, a subslot number, a physical port number and a logical port number which are used for receiving the user packet. If the PPPoE is a PPPoE over Virtual Local Area Network (VLAN) (i.e. PPPoEoVLAN), the ID information further includes a VLAN ID. If the PPPoE is a PPPoE over Asynchronous Transfer Mode (ATM) (i.e. PPPoEoA), the ID information further includes a Virtual Path Identifier (VPI) and a Virtual Channel Identifier (VCI).

In order to enhance the process efficiency of the BAS, this step may also be omitted.

In Step 150, the BAS discards the dial-request packet and ends the flow. If the user is not allowed to perform the quick-redial in Step 130, or the user does not pass the user security checking in Step 140, the BAS discards the dial-request packet and at the same time, sends the discovery packet between the PPPoE User Equipment and the BAS device periodically. When the resources occupied by the overtime Echo-Request of the quick-redial are released, the user enables to redial in the network again, which is the known technology and no further description is given here.

In Step 160, the BAS actively releases the on-line resources allocated previously for the user, then performs Step 170. If the user is allowed to perform the quick-redial in Step 130 and passes the user security checking in Step 140, the BAS begins to perform the quick-redial processing. Firstly, the on-line resources allocated previously for the user are released and the accounting of the user is terminated immediately. The on-line resources include task, a packet queue, a memory block, a timer and etc needed for a PPPoE entity and a PPP entity operating. After the process, the state of the user is the same as the state of an off-line user, and then the processing for the user redialing in the network in Step 170 can be performed.

In Step 170, the BAS handles online for the user.

Though the present invention has been illustrated and described by referring to some preferred embodiments of the present invention, those skilled in the art should understand that various changes may be made in form and detail without departing from the spirit and the scope of the present invention and therefore should be covered in the protection scope of the present invention defined by the appended claims and its equivalents.

## Claims

1. A method of quick-redial for a broadband network user, comprising:
determining whether the user is on-line by a Broadband Access Server (BAS), upon receiving a dial-request padecket from the user;
releasing on-line resources preallocated to the user and handling on-line for the user, if the user is on-line; and
handling on-line for the user, if the user is not on-line.

2. The method according to Claim 1, wherein determining whether the user is on-line comprises:
acquiring a source Media Access Control (MAC) address from the dial-request packet by the BAS; and
looking up source MAC addresses of on-line users stored in a database and determining whether an MAC address matching the acquired source MAC address exists; if there is an MAC address matching the acquired source MAC address, determining that the user is on-line, otherwise determining that the user is not on-line.

3. The method according to Claim 1, wherein the on-line resources preallocated to the user comprise task, a message queue, a memory block and a timer needed for a Point-to-Point Protocol over Ethernet (PPPoE) entity and a Point-to-Point Protocol entity.

4. The method according to Claim 1, further comprising:
upon determining whether the user is on-line, the BAS determining whether the user is allowed to perform a quick-redial; if the user is allowed, the BAS releasing on-line resources preallocated to the user and handling on-line for the user; otherwise, discarding the dial-request packet.

5. The method according to Claim 4, further comprising: setting a quick-redial attribute in an interface which the user uses to access the BAS by the BAS, wherein the process of the BAS determining whether the user is allowed to perform the quick-redial comprises:
the BAS inquiring the interface which the user uses to access the BAS set in the database, and determining whether the user is allowed to perform the quick-redial according to the quick-redial attribute of the interface.

6. The method according to Claim 4, further comprising: setting a quick-redial authority for the user in the database, wherein the process of the BAS determining whether the user is allowed to perform the quick-redial comprises:
the BAS inquiring the quick-redial authority of the user in the database, and determining whether the user is allowed to perform the quick-redial according to the quick-redial authority.

7. The method according to Claim 1 or 4, further comprising:
before releasing the on-line resources preallocated for the user and handling on-line for the user, the BAS performing a user security checking for the user, if the user passes the user security checking, the BAS releasing the on-line resources preallocated for the user and handling on-line for the user; otherwise, discarding the dial-request packet.

8. The method according to Claim 7, wherein the BAS performing a user security checking for the user comprises:
the BAS obtaining Identification (ID) information from the dial-request packet, comparing the ID information with an existing on-line record of the user with the same MAC address recorded in the database; if the ID information matches the record, the user passes the checking, otherwise, the user does not pass the checking.

9. The method according to Claim 8, wherein the ID information comprises at least one of a slot number, a subslot number, a physical port number and a logical port number for receiving the user packet.

10. The method according to Claim 9, wherein when the PPPoE is based on a Virtual Local Area Network (VLAN), the ID information further comprises a Virtual Local Area Network Identifier (VLAN ID); and
when the PPPoE is based on an Asynchronous Transfer Mode (ATM), the ID information further comprises a Virtual Path Identifier (VPI) and a Virtual Channel Identifier (VCI).
